Europäisches Patentamt

European Patent Office

Office européen des brevets

(19)

(11) Publication number: **0 090 474**
**B1**

(12) **EUROPEAN PATENT SPECIFICATION**

(45) Date of publication of patent specification: 20.11.86

(51) Int. Cl.⁴: **A 01 G 9/10, A 01 C 11/02**

(21) Application number: **83200447.7**

(22) Date of filing: **29.03.83**

(54) Method and device for sowing and planting out.

(30) Priority: **30.03.82 NL 8201317**

(43) Date of publication of application:
**05.10.83 Bulletin 83/40**

(45) Publication of the grant of the patent:
**20.11.86 Bulletin 86/47**

(84) Designated Contracting States:
**AT BE CH DE FR GB IT LI LU NL SE**

(56) References cited:
**NL-A-7 908 582**

(73) Proprietor: **VISSER TUINBOUWTECHNIEK EN HOUT B.V.**
**Ben. Havendijk 115a**
**'s-Gravendeel (NL)**

(72) Inventor: **Visser, Anthony**
**Damaststraat 8**
**'s-Gravendeel (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

## Description

The invention is related to a method for sowing and planting out in which sow blocks are positioned in longitudinal and transverse rows below a sowing device and in the sow cavity of each sow block one or more seeds are introduced whereupon the seeds in the sow blocks are allowed to develop in a suitable environment into seedlings, and the seedlings together with the sow block are transferred to mutually greater distances in a substrate to be allowed to grow up into plants.

In the method applied until now the sow blocks are positioned abutting each other in shallow containers and placed below a sowing device.

The containers with sow blocks provided with seeds subsequently are transferred to a green house or such. After some time the containers are transferred to a propagator who manually takes the sow blocks with the small plants out of the container and brings them at greater mutual distances in the soil or in one or the other substrate that is suitable for growing.

The invention aims to mechanize said method. According to the invention this aim is obtained by the fact that the sow blocks are positioned in through holes of a flat dish in which the sow blocks fit with play, said dish is loosely supported underneath by a container that is provided with ventilation and/or drain passages, the container stopping the sow block from leaving the holes downwardly, the combination of dish and container so formed is transferred from below the sowing device and the seeds are allowed to grow into seedlings, the combinations are fed by a conveyor device to a transplanting device, in the transplanting device the dishes with the sow blocks are pushed out of the containers onto a transplanting table, rows of holes being provided in the table extending in the longitudinal and transverse directions at a spacing that is greater than the spacing of the smaller sow blocks in the dish and which corresponds with the spacing of larger sow blocks which are to be positioned below the transplanting device and arranged in longitudinal and transverse rows, these larger sow blocks forming substrate in which the dimension of the holes in the transplanting table and of the sow cavities in the larger sow blocks is somewhat greater than the outside dimension of the smaller sow blocks and the depth of the sow cavities in the larger sow blocks about the same as the height of the smaller sow blocks, and during the transfer of the smaller sow blocks into the larger ones the disk is moved in longitudinal and transverse directions with regard to the transplanting table.

It will be clear that the sowing and the transplanting in general is performed at two different places. The transplanting mostly is done by propagators which grow crops such as tomatoes, cucumbers, peppers, etc., while the sowing and growing of the seeds to seedlings mostly is done in specialized enterprises.

The greater sow blocks also can be rock wool pots of "oase" blocks.

With the method according to the invention in particular the labour intensive transplanting is omitted by which the working expenses are considerably reduced.

The invention is also related to the combination of dish and container destined for performing the method, in which according to the invention the dish comprises a flat rectangular plate, with through holes in longitudinal and transverse rows, and the container comprises a bottom section provided with upstanding edges along three sides, in which the dish fits. Said bottom section being provided with ventilation and/or drain passages.

The invention is also related to a planting out device, comprising a substantially horizontally extending conveyor device on which combinations are to be fed with the open side of the containers in transverse direction of the conveyor device, a transplanting table positioned transverse to the conveyor device onto which dishes can be pushed from the containers, passages being present in the table for the smaller sow blocks, a conveyor device positioned below the transplanting table for larger sow blocks which are in longitudinal transverse rows at a greater spacing that the smaller sow blocks, a mechanism first to move the combination stepwise along a distance corresponding to the width of the combination, a second mechanism that moves the dish from the container onto the transplanting table, a third mechanism that moves the larger sow blocks stepwise such that each stepwise movement brings a further set of larger sow blocks into position beneath the passages in the transplanting table, a fourth mechanism that moves the dish or the dishes present on the transplanting table along distances equal to the spacing of half the spacing of the smaller sow blocks in the dish in longitudinal transverse directions.

The invention will be elucidated with the air of the drawings, in which:

Fig. 1 shows the combination of a dish and container in view from above and free from each other;

Fig. 2 is a view of the provision of the combination with sow blocks and the sowing of the sow blocks;

Fig. 3 is a view of a filled and sown combination during the sprouting of the seeds;

Fig. 4 shows in perspective a transplanting device;

Fig. 5 shows a view from above on a larger scale of a part of the transplanting device; and

Fig. 6a, 5b, 6c and 6d show different phases of the transplanting.

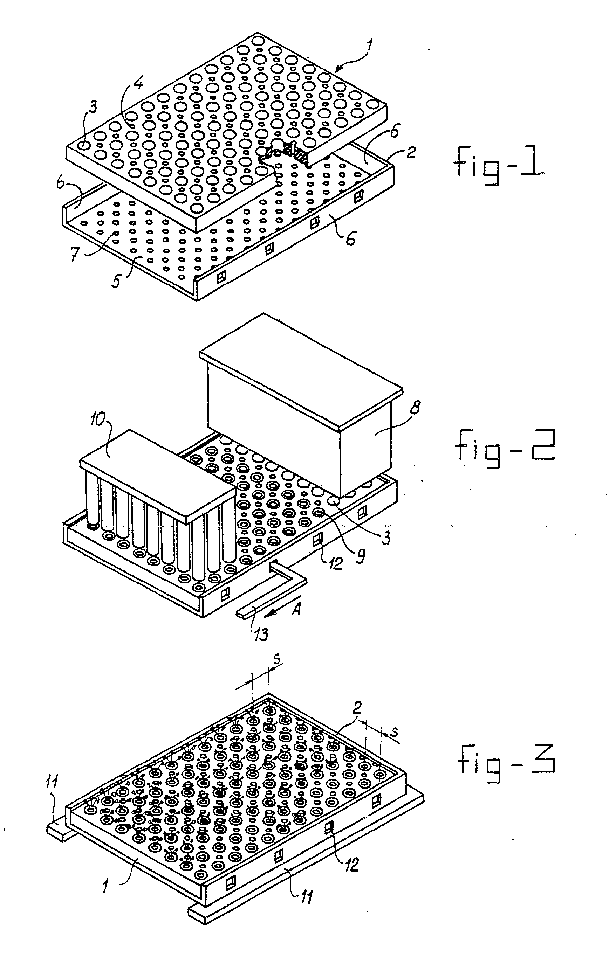

Figure 1 shows a dish 1 at some distance above the container 2.

The dish 1 comprises a thick rectangular plate of polystyrene or drawn or extruded hard plastic material or some other suitable material.

In the dish larger and smaller cylindrical through holes 3 and 4 respectively are present. These holes 3 and 4 are positioned in longitudinal and transverse rows. The number of larger holes 3 is e.g. 96 in 12 rows each with 8 holes. This number, however, is purely illustrative.

The container 2 comprises a bottom section 5 and upstanding edges 6 along three sides.

On line with the holes 3 and 4 of the dish 1 smaller holes 7 are provided in the bottom section 5.

In Figure 2 the dish 1 is positioned in the container 2 and the combination is placed below a sow block press 8 that is known per se, with which in a known manner cylindrical blocks 9 are formed, that after pressing fall in the holes 3. The outside diamter of these sow blocks 9, which are provided in a known manner with a sow cavity is somewhat smaller than the diameter of the holes 3, so that the sow blocks 9 fit easily in the holes.

The combinations 1, 2 are moved stopwise in the direction of the arrow A under the sow block press 8 and then arrive below a sowing device 10, that drops one or more seeds in each sow cavity.

The combination 1, 2 subsequently moves on a conveyor, not-shown beneath the devices 8 and 10.

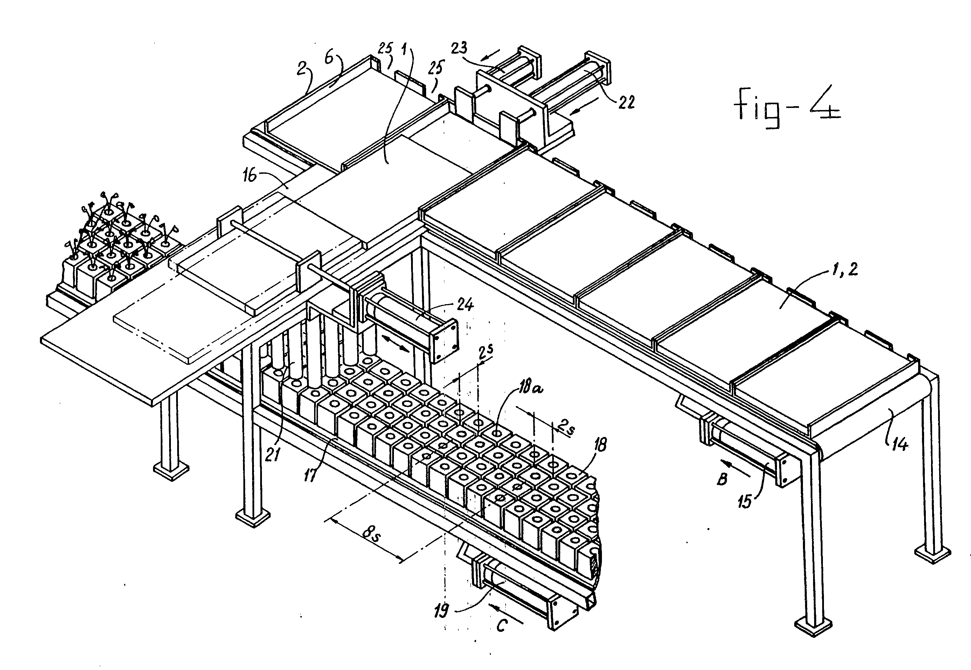

The combination 1, 2 is then picked up and put on support edges 11 in a greenhouse or such like, see Figure 3. The combinations 1, 2 are positioned next to each other and the seeds have the opportunity to grow up to small plants.

The smaller holes 4 in the dish 1 that are in one line with the holes 7 in the bottom section 5 allow an air circulation through the dish 1 and between the plants, by which the sprouting and growing is promoted.

The holes 7 in the bottom section 5 that are in one line with the larger holes 3 in the dish 1 serve as de-watering holes.

It is also possible to embody the bottom section 5 as a grating with bars or it may consist of rigid mesh. These embodiments are not shown.

In the upstanding edges 6 of each container 2 holes 12 are provided in which the conveyor means 13, that is destined to move the combinations 1, 2 stepwise, may grip.

After the development of the seeds to smaller plants the combinations 1, 2 are transferred to propagators where the plants have to be grown completely. The plants therefore have to be transplanted, that means they have to be transferred to mutually greater distances on one or other substrate that can be formed by earth, rock wool, greater sow blocks etc.

This transplanting until now always is done manually and is very labour intensive and therefore costly.

According to the invention this transplanting is mechanized for which in the first place is pointed to Figure 4.

On a conveyor device 14 the combinations 1, 2 are positioned with the open side of the containers 2 along one side wall of the conveyor device 14. With the aid of a plunger 15 or such like the combinations 1, 2 are moved stepwise in the direction of the arrow B. During each step the combinations 1, 2 are moved along the width of a container 2. The plunger 15 for instance grips the lower side of each container 2.

In this way a combination 1, 2 comes in front of a cross table 16, the so-called transplanting table. The dish 1 with the sow blocks 9 and the small plants now are pushed out of the container 2 to above the table 16. Notwithstanding the fact that the dish 1 now is not supported anymore by the container 2 the sow blocks 9 cannot fall down, because they are held by the table 16.

Below the cross table 16 a conveyor 17 is provided on which larger sow blocks 18 are positioned. These sow blocks 18 have a cavity 18a, in which the smaller sow blocks 9 fit with some play.

With the plunger 19 the larger sow blocks 18 are moved stepwise in the direction of the arrow C.

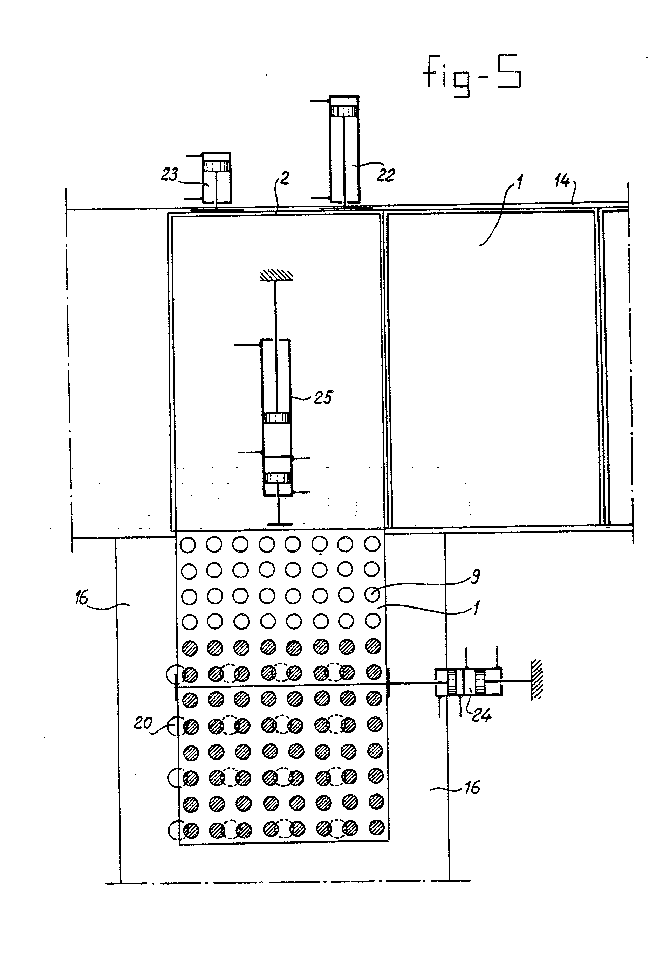

In the cross table 16 sixteen holes 20 are provided, see Figure 5. In case the pitch between the small sow blocks 9 in the dish 1 is S, see Figure 3, then the pitch of the holes 20 is 2S. This is also the pitch of the larger sow blocks 18.

Below the holes 20 downcomer pipes 21 can be provided that open above the cavities 18a in the greater sow blocks. These downcomer pipes, however, are not necessary.

In the case two cross rows each with four sow blocks 18 are to be filled with sixteen sow blocks 9 then the plunger 19 moves the sow blocks 18 in the direction of the arrow C along a distance 8S.

In this way always sixteen smaller sow blocks 9 are transferred in the larger sow blocks 18. The filled sow blocks 18 are than removed from the conveyor device and positioned to let the plants grow further. This is not shown. Transverse to the conveyor 14 two plungers 22 and 23 are provided that are able to push a disk 1 out of the related container 2.

The plunger 22 pushes the dish 1 completely out of the container 2. The dish 1 then is in the position as shown in Figure 5. From Figure 5 it appears that the sow blocks 9 cannot fall from the table 16 by the fact that holes 3 in which the sow blocks are positioned, are not in line with the holes 20 in the table 16.

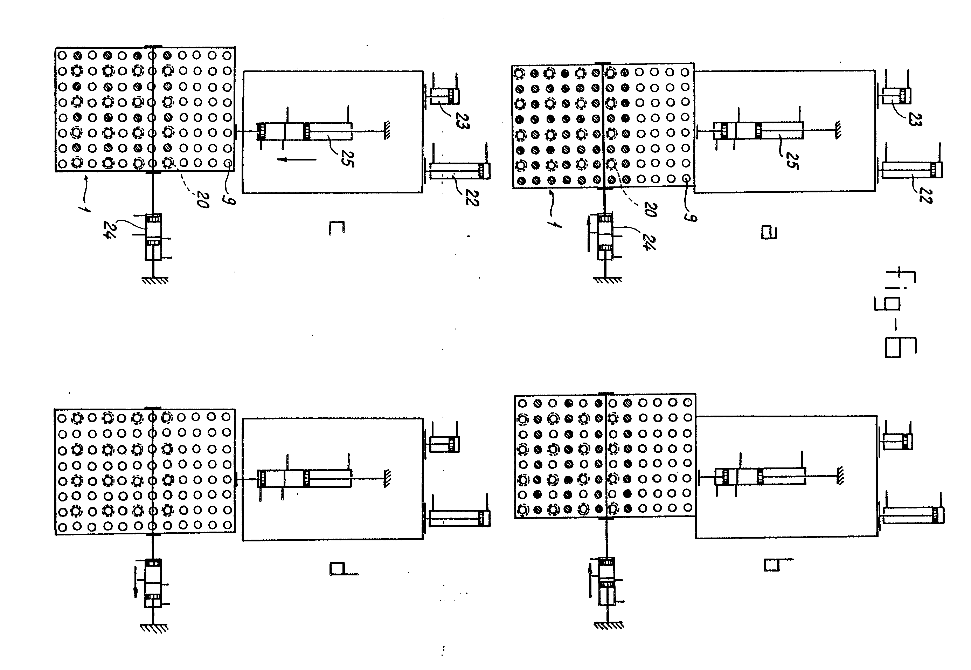

With the aid of plunger 24 the dish 1 is moved to the left along a distance $\frac{1}{2}$S, from the position according to Figure 5, by which the position according to Figure 6a is obtained, after which sixteen sow blocks 9 fall through sixteen holes 20 into the cavities 18a of the larger sow blocks 18.

Subsequently, the dish 1 is moved by the plunger 24 further to the left along a distance S to a position according to Figure 6b. In the meantime sixteen subsequent sow blocks 18 are moved along a distance 8S and are positioned below the table 16. Now again sixteen sow blocks 9 fall down.

Subsequently, the dish 1 is moved forwardly by the plunger 25, that is positioned below the conveyor 14 along a distance S from the position according to Figure 6b to the position according to Figure 6c.

Herewith again sixteen sow blocks 9 fall down.

Finally, the dish 1 is again moved to the right over a distance S from the position of Figure 6c to the position of Figure 6d with the aid of the plunger 24.

The plunger 24 is performed to make ½S and S strokes, so it is a double plunger.

In this way sixty-four blocks 9 are transferred from dish 1 to the sow blocks 18. The dish 1 is now two-thirds emptied.

In the meantime the next combination 1, 2 has arrived on the position in front of table 16 and pushed over half the length by plunger 23 out of the container 2.

Now 1/3 of the first dish 1 and 1/3 of the second dish 1 have to be freed from sow blocks 9. For this reason the second dish 1 has to be pushed over half the length of the plunger 23 completely out of the container 2 by which the first dish is taken along.

The other movements are the same as described above. To be able to push the dish 1 out of the container 2 recesses are provided in the upstanding back edges 6 of the container 2, see Figure 4, in order that the plungers 22 and 23 are able to grip dish 1.

With the method and the device according to the invention the transplanting can be mechanized completely.

The plungers are pneumatic or hydraulic plungers which can be obtained on the market and which are controlled in a known manner.

It will be clear that also electric means are suitable to perform the several movements.

**Claims**

1. Method for sowing and planting out in which sow blocks (9) are positioned in longitudinal and transverse rows below a sowing device (10) and in the sow cavity of each sow block (9) one or more seeds are introduced whereupon the seeds in the sow blocks are allowed to develop in a suitable environment into seedlings, and the seedlings together with the sow block (9) are transferred to mutually greater distances in a substrate to be allowed to grow up into plants, wherein the sow blocks are positioned in through holes (3) of a flat dish (1) in which the sow blocks fit with play, said dish (1) is loosely supported underneath by a container (2) that is provided with ventilation and/or drain passages (7), the container (2) stopping the sow blocks (9) from leaving the holes downwardly, the combination of dish (1) and container (2) so formed is transferred from below the sowing device (10) and the seeds are allowed to grow into seedlings, the combinations are fed by a conveyor device to a transplanting device, in the transplanting device the dishes (1) with the sow blocks (9) are pushed out of the containers (2) onto a transplanting table (16), rows of holes being provided in the table extending in the longitudinal and transverse directions at a spacing that is greater than the spacing of the smaller sow blocks (9) in the dish (1) and which corresponds with the spacing of larger sow blocks (18) which are to be positioned below the transplanting device and arranged in longitudinal and transverse rows, these larger sow blocks (18) forming substrate in which the dimension of the holes in the transplanting table and of the sow cavities in the larger sow blocks (18) is somewhat greater than the outside dimension of the smaller sow blocks (9) and the depth of the sow cavities in the larger sow blocks (18) is about the same as the height of the smaller sow blocks (9) and during the transfer of the smaller sow blocks (9) into the larger ones (18) the dish (1) is moved in longitudinal and transverse directions with regard to the transplanting table (16).

2. Method according to claim 1, characterized in that the spacing of the holes in the transplanting table (16) and of the larger sow blocks (18) is twice the spacing of the holes in the dish (1) and of the smaller sow blocks (9).

3. Combination of a dish and a container intended for use in the method according to claim 1 or 2, wherein the dish (1) comprises a flat rectangular plate with through holes (3) in longitudinal and transverse rows, and the container (2) comprises a bottom section (5) with upstanding edges (6) along three sides, within which the dish (1) fits, said bottom section (5) being provided with ventilation and/or drain passages (7).

4. Combination according to claim 3, characterized in that the drain passages (7) in the bottom section (5) are positioned beneath the holes (3) for the sow blocks (9) in the dish (1).

5. Combination according to claim 3 or 4 characterized in that between the drain passages (7) in the bottom section (5) ventilation openings are present, that are in line with the ventilation passages (4) in the dish (1).

6. Combination according to claim 3, characterized in that the bottom section (5) comprises a grate.

7. Combination according to claim 3, 4, 5 or 6, characterized in that the upstanding edges (6) of the container (2) are provided with holes, notches or the like, that are used for displacing and positioning of the container (2).

8. Combination to one or more of the claims 2—7, characterized in that in the dish (1) twelve rows each of 8 holes are provided.

9. Planting out device destined to perform the method according to claim 1 or 2, comprising a substantially horizontally extending conveyor device (14) on which combinations according to one or more of the claims 3—8 are to be fed with the open side of the containers in transverse direction of the conveyor device (14), a transplanting table (16) positioned transverse to the conveyor device (14) onto which dishes (1) can be pushed from the containers (2), passages (20) being present in the table (16) for the smaller sow blocks (9), a conveyor device (17) positioned below the transplanting table (16) for larger sow blocks (18) which are in longitudinal and transverse rows at a greater spacing than the smaller sow blocks (9), a first mechanism (25) to move the combination (1, 2) stepwise along a distance corresponding to the width of the combination, a second mechanism (22, 23) that moves the dish (1) from the container (2) onto the transplanting table (16), a third mechanism (19) that moves the larger sow blocks (18) stepwise such that each stepwise movement brings a further set of larger sow blocks (18) into position beneath the passages (20) in the transplanting table (16), a fourth mechanism (24, 25) that moves the dish (1) or the dishes present on the transplanting table (16) along distances equal to the spacing or half the spacing of the smaller sow blocks (9) in the dish (1) in longitudinal and transverse directions.

10. Planting out device according to claim 9, further comprising a dish (1) with twelve rows each of eight smaller sow blocks (9) at a spacings, the transplanting table (16) having sixteen openings (20) in a square pattern on a pitch 2S and the larger sow blocks (18) being positioned in transverse rows of four and these larger sow blocks (18) being moved stepwise over a distance 8S.

## Patentansprüche

1. Verfahren zum Säen und Auspflanzen, bei dem Säblöcke (9) in Längs- und Querreihen unter einer Sävorrichtung (10) angeordnet und in den Sähohlraum eines jeden Säblockes (9) ein oder mehrere Samen eingeführt werden, so daß sich die in den Säblöcken befindlichen Samen in einer geeigneten Umgebung zur Sämlingen entwickeln, die Sämlinge zusammen mit de Säblock (9) auf größere Abstände voneinander in einem Substrat gebracht werden, so daß sie zu Pflanzen auswachsen können, wobei die Säblöcke in Durchgangslöchern (3) einer flachen Platte (1), in die die Säblöcke mit Spiel eingepaßt werden können, angeordnet werden, die Platte (1) von unten lose durch einen Behälter (2) gelagert wird, der mit Ventilations- und/oder Entwässerungskanälen (7) versehen ist und verhindert, daß die Säblöcke (9) der Löcher nach unten verlassen, die aus der Platte (1) und dem Behälter (2) gebildete Einheit aus ihrer Lage unter der Sävorrichtung (10) weg bewegt wird, so daß die Samen zu Sämlingen auswachsen können, die Einheiten über eine Fördervorrichtung zu einer Umpflanzvorrichtung bewegt werden, und die Platten (1) mit den Säblöcken (9) in der Umpflanzvorrichtung aus den Behältern (2) heraus auf einen Umpflanztisch (16) gedrückt werden, wobei in dem Umpflanztisch Reihen von Löchern vorgesehen sind, die sich in Längs- und Querrichtung erstrecken und einen Abstand voneinander aufweisen, der größer ist als der Abstand der kleineren Säblöcke (9) in der Platte (1) und der dem Abstand von größeren Säblöcken (18) entspricht, die unter der Umpflanzvorrichtung angeordnet werden sollen und in Längs- und Querreihen angeordnet sind, wobei diese grösseren Säblöcke (18) ein Substrat bilden, bei dem die Abmessung der Löcher im Umpflanztisch und der Sähohlräume in den größeren Säblöcken (18) etwas größer ist als der Außendurchmesser der kleineren Säblöcke (9), und die Tiefe der Sähohlräume in den größeren Säblöcken (18) etwa gleich groß ist wie die Höhe der kleineren Säblöcke (9), und bei dem während der Überführung der kleineren Säblöcke (9) in die größeren (18) die Platte (1) in Längs- und Querrichtung relativ zum Umpflanztisch (16) bewegt wird.

2. Verfahren nach Anspruch 1, dadurch gekennzeichnet, daß der Abstand der Löcher im Umpflanztisch (16) und der größeren Säblöcke (18) doppelt so groß ist wie der Abstand der Löcher in der Platte (1) und der kleineren Säblöcke (9).

3. Aus einer Platte und einem Behälter bestehende Einheit zur Verwendung in dem Verfahren nach Anspruch 1 oder 2, bei der die Platte (1) eine flache rechteckige Platte mit Durchgangslöchern (3) in Längs- und Querreihen und der Behälter (2) einen Bodenabschnitt (5) mit aufrecht stehenden Rändern (6) entlang drei Seiten, in den die Platte (1) eingepaßt ist, aufweist, wobei der Bodenabschnitt (5) mit Ventilations- und/oder Entwässerungskanälen (7) versehen ist.

4. Einheit nach Anspruch 3, dadurch gekennzeichnet, daß die Entwässerungskanäle (7) in Bodenabschnitt (5) unter den Löchern (3) für die Säblöcke (9) in der Platte (1) angeordnet sind.

5. Einheit nach Anspruch 3 oder 4, dadurch gekennzeichnet, daß zwischen den Entwässerungskanälen (7) im Bodenabschnitt (5) Ventilationsöffnungen vorgesehen sind, die zu den Ventilationskanälen (4) in der Platte (1) ausgerichtet sind.

6. Einheit nach Anspruch 3, dadurch gekennzeichnet, daß der Bodenabschnitt (5) einen Rost aufweist.

7. Einheit nach den Ansprüchen 3, 4, 5 oder 6, dadurch gekennzeichnet, daß die aufrecht stehenden Ränder (6) des Behälters (2) mit Löchern, Kerben o. ä. versehen sind, die zum Verschieben und Lagern des Behälters (2) dienen.

8. Einheit nach einem oder mehreren der Ansprüche 2 bis 7, dadurch gekennzeichnet, daß in der Platte (1) zwölf Reihen mit jeweils acht Löchern vorgesehen sind.

9. Auspflanzvorrichtung zur Durchführung des Verfahrens nach Anspruch 1 oder 2 mit einer sich im wesentlichen horizontal erstreckenden Fördervorrichtung (14), auf der Einheiten nach einem oder mehreren der Ansprüche 3 bis 8 mit der offenen Seite der Behälter in Querrichtung der Fördervorrichtung (14) zugestellt werden sollen, einem Umpflanztisch (16), der quer zur Fördervorrichtung (14) angeordnet ist und auf den Platten (1) aus den Behältern (2) gedrückt werden können, wobei in diesem Tisch (16) Kanäle (20) für die kleineren Säblöcke (9) vorgesehen sind, einer Fördervorrichtung (17), die unter dem Umpflanztisch (16) für größere Säblöcke (18) angeordnet ist, die sich in Längs- und Querreihen mit einem größeren Abstand erstrecken als die kleineren Säblöcke (9), einem ersten Mechanismus (25) zur Bewegung der Einheit (1, 2) schrittweise über eine Strecke, die der Breite der Einheit entspricht, einem zweiten Mechanismus (22, 23), der die Platte (1) aus dem Behälter (2) auf den Umpflanztisch (16) bewegt, einem dritten Mechanismus (19), der die größeren Säblöcke (18) derart schrittweise bewegt, daß jede Schrittbewegung einen weiteren Satz von größeren Säblöcken (18) in Position unter den Kanälen (20) im Umpflanztisch (16) bringt, und einem viertem Mechanismus (24, 25), der die Platte (1) oder die Platten, die auf dem Umpflanztisch (16) vorhanden sind, über Strecken bewegt, die dem Abstand oder der Hälfte des Abstandes der kleineren Säblöcke (9) in der Platte (1) in Längs- und Querrichtung entsprechen.

10. Auspflanzvorrichtung nach Anspruch 9, dadurch gekennzeichnet, daß sie desweiteren eine Platte (1) mit zwölf Reihen mit je acht kleineren Säblöcken (8) in Abständen umfaßt, daß der Umpflanztisch (16) sechzehn Öffnungen (20) in einem quadratischen Muster mit einem Abstand von 2 S aufweist und daß die größeren Säblöcke (18) in Querreihen von vier angeordnet sind und schrittweise über eine Strecke von 8 S bewegt werden.

**Revendications**

1. Procédé d'ensemencement et de repiquage dans lequel on dispose des blocs d'ensemencement (9) en rangées longitudinales et transversales au-dessous d'un dispositif d'ensemencement (10), on introduit dans la cavité d'ensemencement de chaque bloc d'ensemencement (9) une ou plusieurs graines de semis, après quoi on laisse les graines placées dans les blocs d'ensemencement se développer dans un environnement convenable pour former des plants, et l'on transfère les plants avec les blocs d'ensemencement (9) de manière à les disposer selon des espacements plus grands entre eux dans un substrat pour qu'ils puissent pousser afin de former des plantes, lequel procédé comprend les étapes consistant:

— à placer les blocs d'ensemencement dans des trous (3) traversant un plateau (1) plat et dans lesquels les blocs d'ensemencement sont logés avec un certain jeu, ledit plateau (1) étant supporté, par-dessous, avec jeu par un récipient (2) pourvu de passages (7) d'aération et/ou de drainage, ce récipient (2) empêchant les blocs d'ensemencement (9) de s'échapper des trous vers le bas,

— à retirer l'ensemble de plateau (1) et de récipient (2) ainsi formé d'en-dessous du dispositif d'ensemencement (10) et à laisser pousser les graines de semis pour former de plants.

— à amener les ensembles vers un dispositif de transplantation, à l'aide d'un dispositif de transport,

— à éjecter, dans le dispositif de transplantation, les plateaux (1) avec les blocs d'ensemencement (9) hors des récipients (2) pour les placer sur une table de transplantation (16) qui est pourvur de rangées longitudinales et transversales de trous espacés entre eux d'une distance plus grande que celle qui sépare les bl_cs d'ensemencement relativement petits (5) dans le plateau (1) et correspondant à l'espacement des blocs d'ensemencement relativement grands (18) appelès à être placés sous le dispositif de transplantation et disposés en rangées longitudinales et transversales, lesdits grands blocs d'ensemencement (18) formant un substrat dans lequel les dimensions des trous de la table de transplantation et celles des cavités d'ensemencement des grands blocs (18) sont légérement supérieures aux dimensions extérieures desdits petits blocs d'ensemencement (9), la profondeur des cavités d'ensemencement des grands blocs d'ensemencement (18) étant sensiblement égale à la hauteur des petits blocs d'ensemencement (9), et

— à déplacer le plateau (1) en direction longitudinale et en direction transversale par rapport à la table de transplantation (16), pendant le transfert des petits blocs d'ensemencement (9) dans les grands blocs (18).

2. Procédé selon la revendication 1, caractérisé en ce que l'espacement des trous ménagés dans la table de transplantation (16) et des grands blocs d'ensemencement (18) représente le double de l'espacement des trous ménagés dans le plateau (1) et des petits blocs d'ensemencement (9).

3. Ensemble de plateau et de récipient, appelé à être utilisé lors de la mise en oeuvre du procédé selon la revendication 1 ou 2, dans lequel le plateau (1) comprend une plaque plate rectangulaire pourvue de trous transversants (3) disposés en rangées longitudinales et transversales, cependant que le récipient (2) comporte une section de fond (5) pourvue de bords montants (6) qui s'étendent le long de trois de ses côtés et dans lesquels s'ajuste le plateau (1), ladite section de fond (5) étant pourvue, par ailleurs, de passages (7) d'aération et/ou de drainage.

4. Ensemble selon la revendication 3, caractérisé en ce que les passages de drainage (7) ménagés dans ladite section de fond (5) sont disposés au-dessous desdits trous (3) ménagés dans le plateau (1) pour recevoir les blocs d'ensemencement (9).

5. Ensemble selon la revendication 3 ou 4, caractérisé en ce que des passages d'aération sont disposés entre les passages de drainage (7) dans ladite section de fond (5) et sont alignés sur les passages d'aération (4) ménagés dans ledit plateau (1).

6. Ensemble selon la revendication 3, caractérisé en ce que ladite section de fond (5) comprend une grille.

7. Ensemble selon les revendications 3, 4, 5 ou 6, caractérisé en ce que les bords montants (6) du récipient (2) sont pourvus de trous, encoches ou analogues qui sont utilisés pour le déplacement et la mise en place du récipient (2).

8. Ensemble selon une au moins des revendications 2 à 7, caractérisé en ce que le plateau (1) est pourvu de douze rangées de huit trous chacune.

9. Dispositif de repiquage pour la mise en oeuvre du procédé selon la revendication 1 ou 2, comprenant un dispositif de transport (14) qui s'étend sensiblement horizontalement et sur lequel des ensembles selon une au moins des revendications 3 à 8 sont susceptibles d'être amenés de façon telle que le côté ouvert des récipient soit orienté transversalement par rapport au dispositif de transport (14), une table de transplantation (16) disposée transversalement par rapport au dispositif de transport (14) étant susceptible de recevoir des plateaux (1) expulsés des récipients (2), ladite table (16) présentant des passages (20) pour les petits blocs d'ensemencement (9), ledit dispositif de repiquage comprenant, en outre, un dispositif convoyeur (17) placé au-dessous de la table de transplantation (16), pour des grandes blocs d'ensemencement (18) disposés en rangées longitudinales et transversales avec un espacement plus grand que celui des petits blocs d'ensemencement (9), un premier mécanisme (25) appelé à déplacer l'ensemble (1, 2) pas-à-pas d'une distance correspondant à la largeur de l'ensemble, un second mécanisme (22, 23), appelé à déplacer le plateau (1) à partir du récipient (2) jusque sur la table de transplantation (16), un troisième mécanisme (19) appelé à déplacer pas-à-pas les grands blocs d'ensemencement (18) de façon telle que chaque incrément de déplacement mette un autre groupe de grands blocs d'ensemencement (18) en place au-dessous des passages (20) de la table de transplantation (16), un quatrième mécanisme (24, 25) appelé à déplacer le plateau (1) ou les plateaux présent(s) sur la table de transplantation (16) de distances égales à l'espacement ou au demi-espacement des petits blocs d'ensemencement (9) dans le plateau (1), en direction longitudinale et transversale.

10. Dispositif de repiquage selon la revendication 9, qui comprend en outre un plateau (1) pourvu de douze rangées de huit petits blocs d'ensemencement (9) chacune avec un espacement déterminé, la table de transplantation (16) présentant seize ouvertures (20) en réseau carré avec un pas de 2S, cependant que les grands blocs d'ensemencement (18) sont disposés par rangées transversales de quatre et sont déplacés pas-à-pas d'une distance 8S.

0 090 474

fig-1

fig-2

fig-3

fig-4

0 090 474

fig-5

0 090 474

Fig-6

4